**Europäisches Patentamt**

**European Patent Office**

**Office européen des brevets**

(19)

(11) Veröffentlichungsnummer: **0 094 072**
**B1**

(12) **EUROPÄISCHE PATENTSCHRIFT**

(45) Veröffentlichungstag der Patentschrift:
**12.03.86**

(51) Int. Cl.⁴: **A 01 B 63/22**

(21) Anmeldenummer: **83104533.1**

(22) Anmeldetag: **09.05.83**

(54) **Bodenbearbeitungsgerät.**

(30) Priorität: **10.05.82 US 376358**

(43) Veröffentlichungstag der Anmeldung:
**16.11.83 Patentblatt 83/46**

(45) Bekanntmachung des Hinweises auf die Patenterteilung:
**12.03.86 Patentblatt 86/11**

(84) Benannte Vertragsstaaten:
**DE FR GB**

(56) Entgegenhaltungen:
**AU - B - 27 400**
**FR - A - 2 342 014**
**US - A - 3 063 737**

(73) Patentinhaber: **DEERE & COMPANY, 1 John Deere Road, Moline Illinois 61265 (US)**

(72) Erfinder: **Hubbard, Kevin Lowell, 50 West 34th Street, New York New York 10001 (US)**
Erfinder: **Roth, Robert Richard, 3135 - 35th Street, Rock Island Illinois 61201 (US)**

(74) Vertreter: **Fricke, Joachim, Dr. et al, Dr. R. Döring, Dr. J. Fricke, Patentanwälte Josephspitalstrasse 7, D-8000 München 2 (DE)**

**EP 0 094 072 B1**

## Beschreibung

Die Erfindung betrifft ein Bodenbearbeitungsgerät mit den Merkmalen des Oberbegriffs des Anspruchs 1.

Es ist ein Bodenbearbeitungsgerät in Form einer Rollen- oder Scheibenegge aus der US-A Nr. 3912017 bekannt, bei dem die schwenkbare oder schwimmende Anordnung des Zugliedes dem Bodenbearbeitungsgerät ermöglichen soll, der Bodenkontur zu folgen. In der Transportstellung wird dagegen diese Beweglichkeit aufgehoben, so dass eine bessere Kontrolle bei der Fahrt über Strassen und dgl. über das angehängte Gerät besteht. Eine Winkelhebelanordnung für das Laufrad steht dabei unter der Wirkung einer Krafteinrichtung, z.B. eines hydraulischen Kraftzylinders, so dass der Rahmen zwischen seinen beiden Funktionsstellungen abgesenkt bzw. angehoben werden kann. Das bekannte Bodenbearbeitungsgerät weist zwischen dem Zugglied und der Winkelhebelanordnung ein unter Zugkraft stehendes Verbindungsglied auf, wobei an dem vorderen Ende dieses Zuggliedes eine komplizierte Hebelanordnung vorgesehen ist. Dadurch wird die Anordnung relativ aufwendig und kompliziert und teuer in der Herstellung. Die Winkelhebelanordnung weist dabei ein Glied auf, das sich vom Rahmen entgegen der Fahrtrichtung schräg nach unten und nach hinten erstreckt. Beim Anheben des Rahmens hebt sich zunächst dessen Hinterradteil an, was bei Arbeiten auf dem Feld, z.B. beim Anheben am Feldrand dazu führt, dass die randnahen Bereiche des Ackers nicht mehr ordnungsgemäss bearbeitet werden können.

Aus der FR-A Nr. 2342014 ist ein Bodenbearbeitungsgerät mit den Merkmalen des Oberbegriffs des Anspruchs 1 bekannt. Dieses zeigt einen doppelarmigen Hebel, dessen oberes Ende über einen Zwischenhebel und eine Leerweg-Verbindung mit der Winkelhebelanordnung für die Bodenräder und mit dem Kraftzylinder verbunden ist.

Das untere Ende ist über eine längenverstellbare Stange mit einem mit der Zugstange fest verbundenen Hebelarm verbunden. Beim Arbeiten auf dem Acker ist das Zugglied in seiner Bewegung um die Schwenkachse frei in einem Ausmass, wie dies durch die verschiedenen gelenkigen Verbindungen ermöglicht wird. Wenn das Bodenbearbeitungsgerät zur Fahrt auf der Strasse gegenüber den Laufrädern angehoben werden soll, wird die durch den Kraftzylinder im bekannten Fall erzeugte Bewegung des winkelförmigen Tragarmes für das Laufrad über den Zwischenhebel unter Aufhebung des Leerweges auf den zweiarmigen Hebel übertragen, der über sein unteres Ende diese Bewegung auf die Zugstange überträgt, um diese gegenüber dem Rahmen nach unten zu drücken.

Es ist Aufgabe der Erfindung, das Bodenbearbeitungsgerät mit den Merkmalen des Oberbegriffs des Anspruchs 1 so weiterzubilden, dass bei einfacherer Ausbildung eine starre und stabilere Einheit für den Strassentransport erhalten wird.

Diese Aufgabe wird durch die Merkmale des Anspruchs 1 gelöst.

Um bei dieser neuen Ausbildung den Rahmen in die Transportstellung zu bringen, wird der Kraftzylinder betätigt, so dass seine Kolbenstange ausgefahren wird. Diese drückt die Winkelhebelanordnung nach unten, wobei diese Druckkraft über das als Druckstange ausgebildete Verbindungsgestänge auf das obere Ende des als einfaches Hebelglied ausgebildeten Zwischenhebels übertragen wird. Dieser mit seinem unteren Ende am Rahmen gelagerte Zwischenhebel überträgt diese Kraft über das unter Druck stehende Druckglied auf die Zugstange. Dadurch, dass sich dabei ein Anschlag der Anschlagvorrichtung auf einen dem Rahmen zugeordneten Anschlagteil anlegt, wird das Zugglied starr festgespannt. Damit wird jede Schwenkbewegung um die Gelenkverbindung zwischen Zugglied und Rahmen ausgeschlossen, während die Gelenkverbindung am vorderen Ende der Zugstange zum Ackerschlepper hin voll wirksam bleibt. Durch das als Druckstange ausgebildete Verbindungsgestänge und das Druckglied zwischen dem Zugglied und einem oberen Bereich des Zwischenhebels erhält man so für die Strassenfahrt eine starre stabile Einheit, die sich leicht transportieren lässt.

Vorteilhafterweise erstreckt sich der untere Abschnitt der Winkelhebelanordnung vom Rahmen nach unten und in Fahrtrichtung nach vorne zu dem Laufrad hin. Die dadurch abweichend von dem bekannten Bodenbearbeitungsgerät erhaltene Anhebecharakteristik ermöglicht es, dass der rückwärtige Teil des Bodenbearbeitungsgerätes während des Anhebens als letztes angehoben wird, wenn der Rahmen des Gerätes am Ende des Feldes mit Hilfe des Kraftzylinders ausgehoben wird. Dadurch ergibt sich eine deutlich verbesserte Handhabung des Gerätes auch im Bereich des Feldrandes.

Die Erfindung wird nachfolgend anhand schematischer Zeichnungen an einem Ausführungsbeispiel näher erläutert.

Es zeigen:

Fig. 1 ein Bodenbearbeitungsgerät gemäss der Erfindung in perspektivischer Ansicht schräg von oben und von hinten.

Fig. 2 eine Seitenansicht in vereinfachter Darstellung, wobei sich der Rahmen in der angehobenen Stellung befindet und die Bodenbearbeitungswerkzeuge weggelassen sind sowie

Fig. 3 in ähnlicher Darstellung wie Fig. 2 das Bodenbearbeitungsgerät in der abgesenkten Stellung.

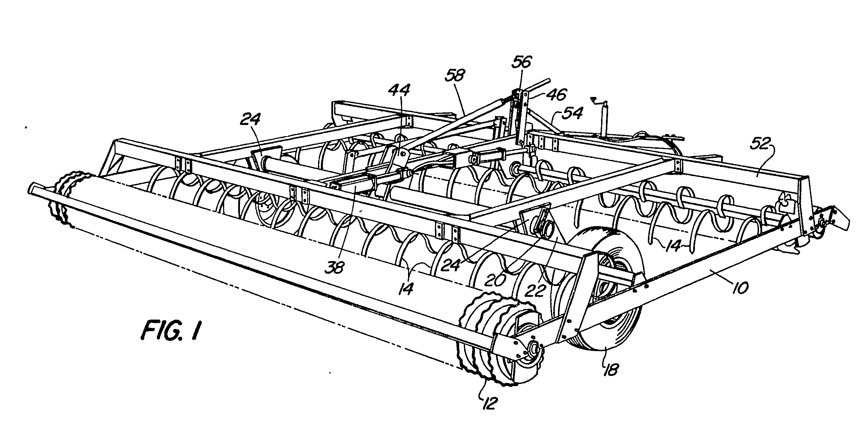

In Fig. 1 ist das Bodenbearbeitungsgerät gemäss der Erfindung als Rollenegge mit einem allgemein rechteckförmigen Rahmen 10 gezeigt, der als Bodenbearbeitungswerkzeuge Rollen 12 und federnde Zinken 14 trägt. In Fig. 1 ist die allgemeine Fahrtrichtung des Gerätes vom Betrachter aus gesehen nach rechts. Der Rahmen 10 wird über eine Radtrageinrichtung 16 von einem Bodenrad 18 abgestützt. Der Rahmen trägt ein horizontales Querrohr 20, auf dem eine Winkelhebelanordnung schwenkbar ist, die an ihrem unteren Armabschnitt 22 eine Laufradachse 26 unterstützt, während an ihrem oberen Armabschnitt 44 ein an den Rahmen 10 abgestützter Kraftzylinder 38 angreift. Das Querrohr 20 ist am Rahmen mit Hilfe von Stützlagern 24 abgestützt. Die unteren Armabschnitte 22 tragen die Laufradachse 26 des Laufrades 18.

Der vordere Bereich des Rahmens weist ein in die allgemeine Fahrtrichtung des Bodenbearbeitungsgerätes weisendes Zugglied 28 auf, das über eine quer zu der Fahrtrichtung verlaufende Querachse 30 an dem Rahmen 10 angelenkt ist. Das vordere Ende des Zuggliedes 28 weist ein Kupplungselement auf, das eine vordere Querachse 34 zur Verbindung mit dem Zugglied eines das Bodenbearbeitungsgerät nachziehenden Fahrzeuges, z.B. eines Ackerschleppers, aufweist. Das Zugglied ist durch das Ende einer Zugstange 36 angedeutet.

Während des Arbeitsbetriebes ist der Rahmen 10 abgesenkt und wird durch die Laufräder 18 und das Zugglied 28 unterstützt, wobei das letztere um die beiden Querachsen 30 und 34 frei schwenkbar ist. Der Kraftzylinder 38 ist an dem Rahmen 10 über eine Querachse 40 angelenkt und weist eine Kolbenstange 42 auf, die an dem aufrechten oberen Armabschnitt 44 der Winkelhebelanordnung angelenkt ist. Wenn der Kraftzylinder betätigt wird, fährt seine Kolbenstange aus, um den Rahmen 10 anzuheben, der weiter über die Laufräder 18 am Boden abgestützt bleibt. Beim Einfahren des Kraftzylinders wird der Rahmen 10 abgesenkt.

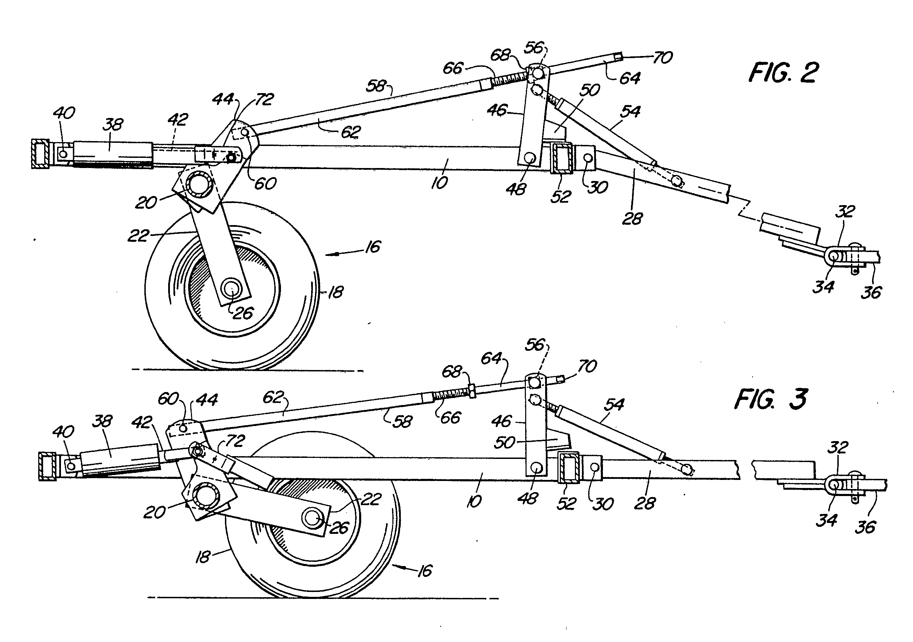

Ein Zwischenhebel 46, der als einfaches Hebelglied ausgebildet ist, ist mit seinem unteren Ende am Rahmen 10 mittels einer Querachse 48 angelenkt, und zwar an einer Stelle unmittelbar hinter der Querachse 30 des Zuggliedes 28. Der Zwischenhebel 46 weist einen nach vorne ragenden, starr befestigten Anschlag 50 auf, der mit einem Abschnitt 52 des Rahmens 10 zusammenwirkt, wenn der Zwischenhebel 46 nach vorne oder in Fig. 2 im Uhrzeigersinne um ein vorbestimmtes Ausmass verschwenkt wird. Dies erfolgt beim Anheben des Rahmens 10. An dem Zugglied ist ein unter Druck stehendes Druckglied 54 angelenkt, dessen nach rückwärts weisendes Ende an einem oberen Bereich des Zwischenhebels 46 angreift. Dieses Druckglied 54 kann z.B. mittels Spannschloss oder dgl. seiner länge nach verstellt werden, wodurch die Höhenlage des Zuggliedes einjustiert werden kann.

Zwischen dem oberen Ende des Zwischenhebels 46 und einer Druckstange 58 ist eine Leerweg-Verbindung vorgesehen, die aus einem Gleitstück 56 am oberen Ende des Zwischenhebels 46 und dem vorderen Abschnitt 64 der Druckstange besteht. Das Gleitstück 56 ist auf dem Abschnitt 64 der Druckstange 58 frei verschiebbar. Der rückwärtige Abschnitt 62 der Druckstange 58 ist mittels einer Querachse 60 am oberen Ende des oberen Armabschnittes 44 der Winkelhebelanordnung angelenkt. Die beiden Abschnitte 62, 64 der Druckstange 58 stehen über ein Gewinde 66 miteinander in Eingriff, über das die wirksame Länge der Druckstange 58 verändert werden kann. Die Länge der Leerwegverbindung ist entgegen der Fahrtrichtung durch einen festen Anschlag 68 bestimmt, der auf dem vorderen Abschnitt 64 der Druckstange angeordnet ist und dessen Lage bei Verstellen der beiden Abschnitte 63, 64 der Druckstange 58 entsprechend verändert wird. Am vorderen Ende des vorderen Abschnittes 64 der Druckstange ist ein Mehrkant 70 oder dgl. zum Ansetzen eines Werkzeuges vorgesehen.

Am rückwärtigen Ende des Rahmens 10 ist ein Sperrglied 72 vorgesehen, welches aus der Freigabestellung nach Fig. 3 in die Sperrstellung nach Fig. 2 verschwenkt werden kann. In dieser zuletzt erwähnten Stellung ist ein unbeabsichtigtes Verstellen der Kolbenstange des Kraftzylinders ausgeschlossen.

Wenn der Rahmen 10 in die angehobene Transportstellung nach Fig. 2 gebracht worden ist, greift der feste Anschlag 68 auf dem vorderen Abschnitt 64 der Druckstange 58 an dem Gleitstück 56 des Zwischenhebels 46 an, da während des Anhebens die Druckstange 58 durch den Kraftzylinder nach vorne bewegt wird. Der starre Anschlag 50 des Zwischenhebels 46 legt sich dabei an den Abschnitt 52 des Rahmens 10. Die Druckkraft des Kraftzylinders überträgt sich über die Druckstange 58, den Anschlag 68 und den Zwischenhebel 46 auf das unter Druck stehende Druckglied 54, das so in der angehobenen Stellung im Verhältnis zum Rahmen 10 starr festgelegt wird. Dabei wird jede Bewegung um die Querachse 30 ausgeschlossen. Dagegen bleibt die vordere Querachse 34 in voller Wirkung. Nach Anheben des Rahmens in die Transportstellung nach Fig. 2 wird das Sperrglied 72 in die Sperrstellung nach Fig. 2 geschwenkt.

Vor Beginn der Arbeit auf dem Feld wird das Sperrglied 72 in die Stellung nach Fig. 3 geschwenkt, so dass die Kolbenstange des Kraftzylinders 38 eingefahren und die Druckstange 58 nach rückwärts bewegt werden kann. Dadurch kommt der feste Anschlag 68 von dem Gleitstück 56 des Zwischenhebels 46 frei, so dass nunmehr auch die Querachse 30 wieder wirksam wird.

Der starre Anschlag 50 begrenzt bei Anlage an dem Abschnitt 52 des Rahmens 10 die Schwenkbewegung des Zwischenhebels 46 und begrenzt somit auch die Relativbewegung nach vorne im Bereich der Leerweg-Verbindung 56, 64.

Das vordere Ende des Zuggliedes 28 kann in jeder bekannten Weise mit der Zugstange des Ackerschleppers verbunden werden, sofern diese Verbindung eine der Querachse 34 entsprechende Gelenkverbindung aufweist. In der Arbeitsstellung wird das Gewicht des Bodenbearbeitungsgerätes hauptsächlich durch die Werkzeuge, hier die Rollenscheiben 12, am Boden abgestützt.

Statt der Zugstange 28 kann ein anderes deichselförmiges Zugglied vorgesehen sein.

## Patentansprüche

1. Bodenbearbeitungsgerät mit einem Rahmen (10), an dessen vorderem Ende ein Zugglied (28) zum Ankuppeln an einen Ackerschlepper um eine horizontale Querachse (30) schwenkbar angelenkt ist und an dem um ein horizontales Querrohr (20) eine Winkelhebelanordnung (22, 44) schwenkbar ist, die an ihrem unteren Armabschnitt

(22) eine Laufradachse (26) unterstützt, während an ihrem oberen Armabschnitt (44) ein an dem Rahmen (10) abgestützter Kraftzylinder (38) angreift, um die Laufradachse (26) relativ zum Rahmen (10) in eine Arbeitsstellung abzusenken bzw. in eine Transportstellung zu heben, bei dem ein Verbindungsgestänge mit einer durch einen Anschlag (68) begrenzten Leerweg-Verbindung (56, 64) und einem am Rahmen (10) gelagerten Zwischenhebel (46), dessen oberes Ende über die Leerweg-Verbindung (56, 64) mit der Winkelhebelanordnung (22, 44) verbunden ist, die Winkelhebelanordnung (22, 44) mit dem Zugglied (28) zur gleichzeitigen Verschwenkung beider Teile gegenüber dem Rahmen (10) während des Anhebens des Rahmens (10) verbindet, dadurch gekennzeichnet, dass der Zwischenhebel (46) als einfaches Hebelglied mit seinem unteren Ende am Rahmen (10) gelagert und mit seinem oberen Ende mit dem während des Anhebens des Rahmens (10) unter Druck stehenden Anschlag (68) einer Druckstange (58) der Leerweg-Verbindung (56, 64) verbunden ist, dass eine die Vorwärtsbewegung des Zwischenhebels (46) gegenüber dem Rahmen (10) begrenzende Anschlagvorrichtung (50, 52) vorgesehen ist und dass ein beim Anheben des Rahmens (10) unter Druck stehendes Druckglied (54) zwischen dem Zugglied (28) und einem oberen Bereich des Zwischenhebels (46) vorgesehen ist.

2. Bodenbearbeitungsgerät nach Anspruch 1, dadurch gekennzeichnet, dass der untere Abschnitt (22) der Winkelhebelanordnung (22, 44) sich vom Rahmen (10) nach unten und in Fahrtrichtung nach vorne zu dem Laufrad (18) hin erstreckt.

## Revendications

1. Machine pour le travail du sol comportant un châssis (10) à l'extrémité avant duquel est articulé un organe d'attelage (28) pouvant pivoter autour d'un axe transversal horizontal en vue d'un accouplement à un tracteur agricole et sur lequel un système de levier coudé (22, 24) peut pivoter autour d'une traverse tubulaire horizontale (20), ce système de levier portant, dans sa partie inférieure en forme de bras (22), un axe de roue porteuse (26), tandis que sa partie supérieure formant bras (44) est attaquée par un vérin (38) prenant appui sur le châssis (10) afin d'abaisser l'axe de la roue porteuse (26) par rapport au châssis (10) jusque dans une position de travail ou de le relever dans une position de transport, une timonerie de liaison reliant, par un dispositif de liaison avec course à vide (56, 64) à mouvement limité par une butée (68) et un levier intermédiaire (46) monté sur le châssis (10), dont l'extrémité supérieure est reliée par l'intermédiaire du dispositif avec course à vide (56, 64) au système de levier coudé (22, 44), ce système de levier coudé (22, 44) à l'organe d'attelage (28), en vue d'assurer un pivotement simultané de ces deux organes par rapport au châssis (10), pendant le relevage dudit châssis 10, caractérisée en ce que le levier intermédiaire (46) est constitué par un levier simple monté sur le châssis (10) par son extrémité inférieure et dont l'extrémité supérieure est reliée à la butée (68) d'une barre de poussée (58) du dispositif de liaison avec course à vide (56, 64), qui est soumise à l'effet d'une poussée pendant le relevage du châssis (10), en ce qu'il est prévu un dispositif de butée (50, 52) limitant le déplacement vers l'avant du levier intermédiaire (46) par rapport au châssis (10), et en ce qu'il est prévu un organe de poussée (54) soumis à l'effet d'une poussée lors du relevage du châssis (10) et disposé entre l'organe d'attelage (28) et une partie supérieure du levier intermédiaire (46).

2. Machine pour le travail du sol suivant la revendication 1, caractérisée en ce que la partie inférieure (22) du système de levier coudé (22, 44) s'étend vers le bas à partir du châssis (10) et vers l'avant dans le sens de la marche, en direction de la roue porteuse (18).

## Claims

1. A ground working implement comprising a frame (10), to the front end of which a tow member (28) for coupling to a tractor is mounted pivotally about a horizontal transverse axis (30) and on which an angle lever assembly (22, 44) is pivotable about a horizontal transverse tube (20), the angle lever assembly (22, 44) supporting a support wheel axle (26) at its lower arm portion (22) while its upper arm portion (44) is engaged by a power cylinder (38) supported on the frame (10), in order to lower the support wheel axle (26) relative to the frame (10) into a working position or to raise it into a transportation position, wherein a connecting linkage, comprising an idle-motion connection (56, 64) delimited by an abutment (68) and an intermediate lever (46) which is mounted to the frame (10) and whose upper end is connected to the angle lever assembly (22, 44) by way of the idle-motion connection (56, 64), connects the angle lever assembly (22, 44) to the tow member (28) for simultaneous pivotal movement of the two parts relative to the frame (10) during the lifting of the frame (10), characterized in that the intermediate lever (46), in the form of a single lever member, is mounted by its lower end to the frame (10) and is connected by its upper end to the abutment (68), which is under pressure during the lifting movement of the frame (10), of a compression rod (58) of the idle-motion connection (56, 64), that there is provided a stop arrangement (50, 52) for limiting the foreward movement of the intermediate lever (46) relative to the frame (10), and that a compression member (54) which is under compression when the frame (10) is lifted is provided between the tow member (28) and an upper region of the intermediate lever (46).

2. A ground working implement according to Claim 1, characterized in that the lower portion (22) of the angle lever assembly (22, 44) extends from the frame (10) downwardly and forwardly in the direction of travel towards the support wheel (18).

FIG. I

0 094 072

FIG. 2

FIG. 3

0 094 072